# EUROPEAN PATENT APPLICATION

(11) **EP 1 291 803 A1**
(43) Date of publication of application: **12.03.2003**
(21) Application number: 01925990.2
(22) Date of filing: 26.04.2001
(51) Int. Cl.: G06K 7/00, H04M 11/00, H04L 9/32, H04M 3/42

(54) **METHOD FOR ATTACHING AUTHENTICATION BAR CODE, AUTHENTICATION METHOD, APPARATUS FOR ATTACHING AUTHENTICATION BAR CODE, AUTHENTICATION APPARATUS AND PORTABLE TERMINAL**

(30) Priority: 02.05.2000 JP 2000133741
(71) Applicant: Jeness Corporation, Nishi-ku, Nagoya-shi, Aichi 451-0053 (JP)
(72) Inventor: FUNAMOTO, Yoshihisa, Kita-ku, Kyoto-shi, Kyoto 603-8511 (JP); TAKAMURA, Mitsuo, JENESS CORPORATION, Nishi-ku, Nagoya-shi, Aichi 451-0053 (JP); YANAGI, Yukio, JENESS CORPORATION, Nishi-ku, Nagoya-shi, Aichi 451-0053 (JP)
(74) Representative: Steil, Christian, Dipl.-Ing.
(86) International application number: JP0103661
(87) International publication number: WO01084473

(57) **Abstract**

The object of the present invention is to provide an identity verifying device, identifying method and the like that by utilizing a barcode enable verification by a system totally different from conventional ones. The present invention provides an identification barcode assigning method for assigning an identification barcode to a party desiring identity verification. This assigning method comprises a step of receiving from the party a barcode request signal including a sender number of the party and a step of generating a barcode for the party. A step of transmitting the generated barcode to the party is preferably further provided. The present invention in this manner also provides an assigning device for assigning barcodes, and an identity verifying method and identity verifying device utilizing such barcodes.

## Description

### TECHNICAL FIELD

The present invention relates to an identity verifying method and the like, particularly to an identifying method and the like using a barcode or the like.

### BACKGROUND ART

Individuals have conventionally been identified by, for example, checking a seal, an assigned password, or an embossment or magnetic tape formed on a card.

In contrast to this, the present invention is directed to providing an identifying method and the like that enable verification of a person's identity and the like by a system totally different from the conventional ones.

In this application, the term "party desiring identity verification" indicates a person desiring to identify himself/herself or establish his/her credibility, examples including such persons as a customer making a purchase, a credit card user, the purchaser of an admission ticket or the possessor of a pass or the like.

The term "identification requester" indicates an party desiring to verify the identity or credibility of a party desiring identity verification, examples including a shop, credit card company, bank or the like, an event organizer checking entering visitors, or an administrator who controls entry into a prescribed area.

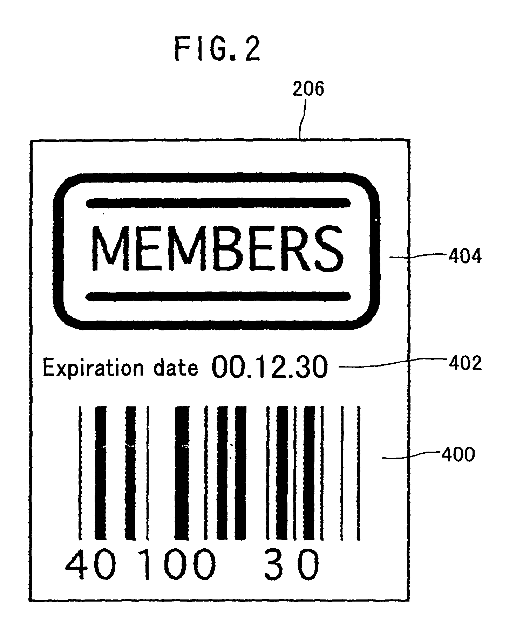

The "barcode" referred to in this application is not limited to the ordinary barcode composed of a pattern formed of multiple laterally arrayed vertical lines such as shown in Fig. 2 but also encompasses other distinguishing marks that can be optically read and recognized, such as two-dimensional barcodes and the like.

### DISCLOSURE OF THE INVENTION

According to this application there is provided a method of assigning an identification barcode to a party desiring identity verification. This identification barcode assigning method comprises a step of receiving from the party a barcode request signal including a sender number of the party and a step of generating a barcode for the party.

The identification barcode assigning method of the present invention preferably further comprises a step of transmitting the generated barcode to the party and a step of displaying the generated barcode to the party. The step of generating a barcode preferably comprises a step of discriminating whether the party is recorded in a database and a step of generating a barcode when the party is recorded in the database.

According to this application there is also provided an identifying method using a barcode. This identifying method comprises a step of receiving from a party desiring identity verification a barcode request signal including a sender number of the party, a step of generating a barcode for the party, a step of storing the barcode in a barcode database, a step of receiving a barcode presented by the party and transmitted by an identity verification requester requesting verification of the party's identity, a step of discriminating whether the received barcode coincides with a barcode stored in the barcode database, and a step of, when the received barcode is one stored in the barcode database, transmitting to the identification requester a signal to the effect that the party's identity is verified.

The present invention further provides an identification barcode assigning device. This identification barcode assigning device comprises receiving means for receiving from a party desiring identity verification a barcode request signal including a sender number of the party, barcode generating means responsive to the barcode request signal for generating a barcode for the party, a barcode database for recording the barcode generated by the barcode generating means, and barcode storing means for storing the barcode in the barcode database.

According to this application there also provided an identity verifying device that uses a barcode. This identity verifying device comprises receiving means for receiving from a party desiring identity verification a barcode request signal including a sender number of the party, barcode generating means responsive to the barcode request signal for generating a barcode for the party, a barcode database for recording the barcode generated by the barcode generating means, barcode storing means for storing the barcode in the barcode database, and barcode checking means for receiving a barcode presented by the party and transmitted by an identity verification requester requesting verification of the party's identity, discriminating whether the received barcode coincides with a barcode stored in the barcode database, and, when the received barcode is one stored in the barcode database, transmitting to the identification requester a signal to the effect that the party's identity is verified.

According to this application there is also provided another identity verifying device that uses a barcode. This identity verifying device comprises barcode receiving means for receiving a barcode presented by the party and transmitted by an identity verification requester requesting verification of the party's identity, and discriminating means for discriminating whether the received barcode coincides with a barcode stored in a barcode database, and barcode checking means for, when the received barcode is one stored in the barcode database, transmitting to the identification requester a signal to the effect that the party's identity is verified.

According to this application there is also provided a portable terminal device using barcodes for identification. This portable terminal device being adapted to display a barcode for a party desiring identity verification generated in response to a request of the party.

### BRIEF DESCRIPTION OF THE DRAWINGS

Fig. 1 is a block diagram showing an identity verification system equipped with an identity verifying device that is an embodiment of the present invention.
Fig. 2 is a diagram showing an example of a displayed barcode.
Fig. 3 is a flowchart showing the flow of process operations when the identity verifying device assigns a barcode to a party desiring identity verification.
Fig. 4 is a flowchart showing the flow of process operations when the identity verifying device checks a barcode to verify the identity of a party desiring identity verification.
Fig. 5 is a diagram showing a display section used in an embodiment of the present invention.

### BEST MODE OF CARRYING OUT THE INVENTION

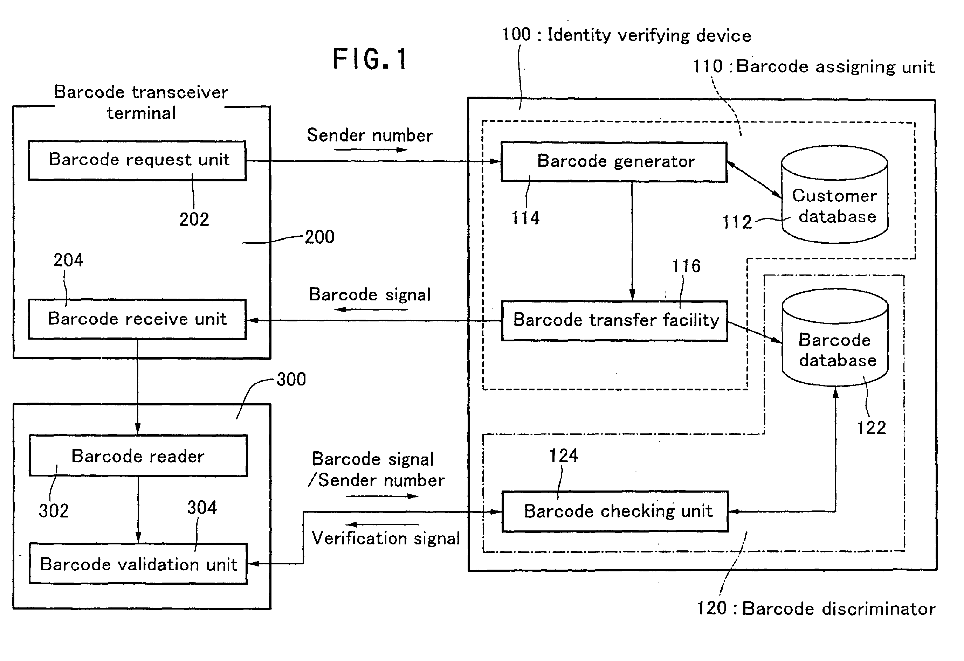

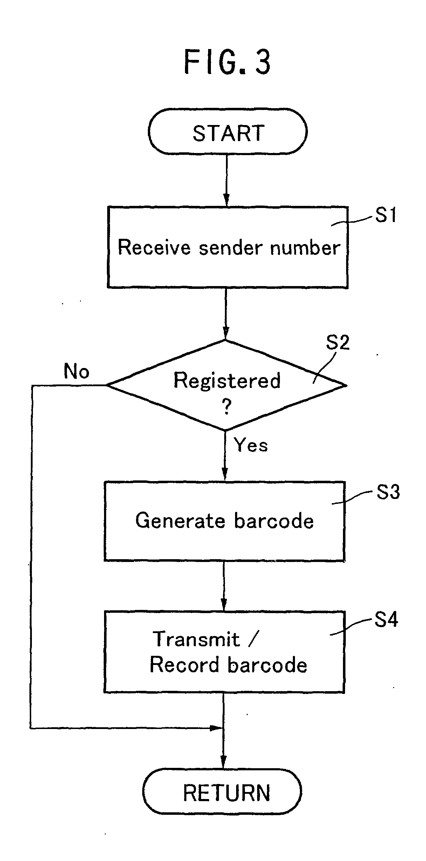

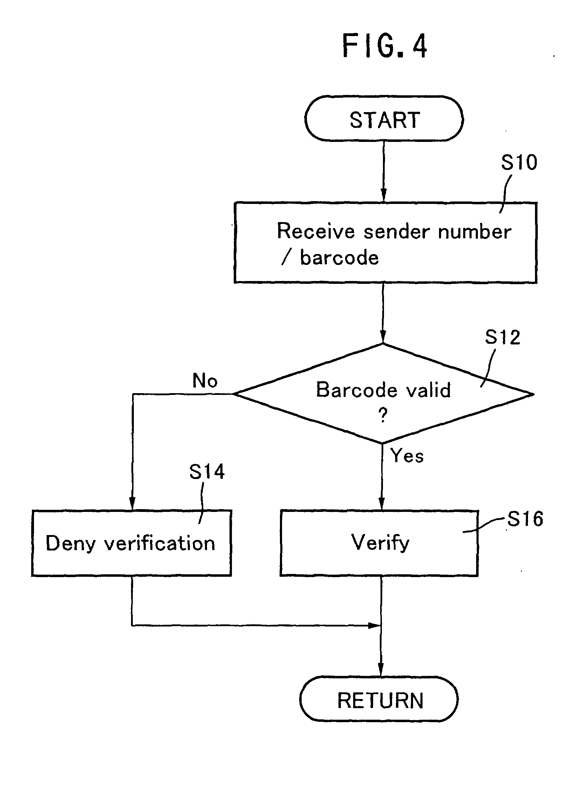

Preferred embodiments of the present invention will now be explained in detail with reference to the drawings. Fig. 1 is a block diagram showing an identity verifying system equipped with an identity verifying device 100 that is an embodiment of the present invention. Fig. 2 is a diagram showing an example of a displayed barcode. Fig. 3 is a flowchart showing the flow of process operations when the identity verifying device 100 assigns a barcode that serves as a distinguishing mark. Fig. 4 is a flowchart showing the flow of process operations when the identity verifying device 100 checks a barcode to verify the identity of a customer.

The structure of the identity verifying device 100 will be explained with reference to Fig. 1. The identity verifying device 100 is a customer administration server. It is equipped with a barcode assigning unit 110 for assigning identification (identity verifying) barcodes to customers (parties to be identified) in response to customer requests. The barcode assigning means 110 is equipped with a customer database (DB) 112, a barcode generator 114 and a barcode transfer facility 116. The identity verifying device 100 can therefore function as a barcode assigning device.

The customer database (customer DB) 112 stores the names, mobile phone numbers and other information regarding registered customers. The barcode generator 114 receives barcode request signals over a telephone circuit (telecommunications circuit) from the transmitter (barcode request unit) 202 of a customer mobile phone 200 serving as a barcode transceiver terminal. The barcode generator 114 is configured to search the customer database 112 for the customer's sender number (mobile phone number) included in the barcode request signal and, if it finds the sender number, to generate a barcode, more precisely a signal corresponding to a barcode (barcode signal). This barcode is for use by the customer at a particular shop 300 and is uniquely generated for the customer and shop. In other words, it is a dedicated barcode that the customer can use only at a particular shop. Otherwise the barcode can be one that serves as a ticket to a concert or other such event, a pass for entering and exiting a controlled area, or the like. The validity period of the barcode can be limited by setting an expiration date.

The barcode transfer facility 116 is adapted to transfer (transmit) the barcode generated by the barcode generator 114, specifically the barcode signal, to the customer and a barcode database 122. The transfer of the barcode to the customer is conducted by transferring the barcode, specifically the barcode signal, over a telecommunications circuit to a receiver (barcode receive unit) 204 of the customer's mobile phone 200. The barcode signal is preferably transferred in, for instance, a GIF or JPEG compressed image format.

In this embodiment, the mobile phone 200 is adapted to store the transferred barcode signal in memory and to be capable of displaying the corresponding barcode 400 on a liquid crystal display screen or other such display unit 206, either immediately or when called up later (see Fig. 2). When the customer (the owner of the mobile phone) makes a purchase at shop or other member of the identity verifying system, he or she displays the assigned barcode 400 on the display unit 206 of the mobile phone and uses the barcode 400 and the phone number (sender number) of his or her mobile phone as means for identity verification (ID). For increased convenience, the expiration date 402 of the registration and other messages 404 can be displayed on the display unit 206 in addition to the barcode 400.

The barcode database 122 is supplied not only with barcode signals but also with sender numbers (mobile phone numbers) of the customer's assigned barcodes, and stores each pair as a combination (in association with each other).

The identity verifying device 100 is further equipped with a barcode discriminator 120 that uses the customer's barcode, specifically barcode signal, sent by the shop where the customer is making a purchase or the like to assign an identity to the customer, i.e., to verify the identity of the customer.

The barcode discriminator 120 is equipped with the barcode database 122 and a barcode checking unit 124. As pointed out above, the barcode database 122 receives the barcodes (barcode signals) transferred from the barcode transfer facility 116 and stores each in combination with the sender number (mobile phone number) of the customer assigned that barcode.

When a barcode validation unit 304 at the shop 300 (identity verification requester) sends the barcode checking unit 124 a combination of a barcode signal read by a barcode reader 302 and a mobile phone number, the barcode checking unit 124 checks the combination against barcode signal and assigned customer sender number (mobile phone number) combinations stored in the barcode database 122 to determine whether the barcode signal and mobile phone number combination sent from the shop 300 is valid.

More specifically, when the barcode database 122 includes a combination that is identical to the barcode signal and mobile phone number combination sent from the shop 300 via a telecommunications circuit, it is decided that the barcode signal and mobile phone number combination sent from the shop 300 is valid, i.e., that the customer making a purchase or the like at the shop (the barcode user) is an authorized user registered in the customer database 112. The barcode checking unit 124 is adapted to send the barcode validation unit 304 at the shop 300 a signal to the effect that the customer making a purchase or the like at the shop (the barcode user) is, or is not, an authorized user.

The flow of process operations (identification assigning method) when the identity verifying device 100 assigns an identification barcode will now be explained with reference to Fig. 3. In Fig. 3, each instance of the symbol S indicates a step in the processing conducted by the identity verifying device 100.

First, the customer requesting the identity verifying device 100 to assign an identification barcode sends a barcode request signal to the identity verifying device 100 over a telecommunications circuit. In this embodiment, the customer sends a barcode request signal to the identity verifying device 100 by phoning the identity verifying device 100 from the mobile phone 200. The barcode request signal sent by the barcode request unit (transmitter) 202 of the mobile phone 200 includes a signal representing the sender number (mobile phone number) of the mobile phone 200. By receiving the barcode request signal from the customer, therefore, the barcode generator 114 of the barcode assigning unit 110 provided in the identity verifying device 100 receives the sender number (S1).

Next, the barcode generator 114 of the identity verifying device 100 checks whether the received customer sender number is registered in the customer database 112 (S2). This is for checking whether the customer requesting barcode assignment is a registered member. If the received customer sender number is not recorded in the customer database 112, the operation is terminated because the customer is not registered. A configuration can be adopted so that in such a case the customer is sent a message to the effect that he or she is not registered and/or a message advising the customer to sign up.

When the received customer sender number is one recorded in the customer database 112, the barcode generator 114 generates a barcode signal for the customer and that particular shop 300 and outputs it to the barcode transfer facility 116 (S3). The barcode transfer facility 116 transfers the barcode signal over a telecommunications circuit to the receiver (barcode receive unit) 204 of the customer's mobile phone 200 and also sends it to the barcode database 122 of the barcode discriminator 120 (S4). At this time, the sender number (mobile phone number) of the customer issued the barcode is sent to the barcode database 122 together with the barcode signal and the two are stored in association with each other (S4).

In the identity verifying system of this embodiment, the mobile phone 200 is adapted to store the transferred barcode signal in memory and to display the corresponding barcode 400 on the display unit 206, either immediately or when called up later. Since the owner of the mobile phone 200 (the customer) can therefore display the received (assigned) barcode 400 on the display unit 206 of the mobile phone when making a purchase at a member of the identity verifying system (the shop 300), he or she can use the barcode 400 and the phone number (sender number) of his or her mobile phone in combination as means for identity verification (ID).

The flow of process operations (identity verifying method) when the identity verifying device 100 conducts verification using an assigned barcode will now be explained with reference to Fig. 4. In Fig. 4, each instance of the symbol S indicates a step in the processing conducted by the identity verifying device 100.

The customer requesting the identity verifying device 100 to verify his or her identity at the time of making a purchase at the member shop 300 of the identity verifying system displays the barcode 400 acquired beforehand in the foregoing manner on the display unit 206 of his or her mobile phone 200 (Fig. 2), whereafter the barcode is read by the shop's barcode reader 302 and input to the barcode validation unit 304. In addition, the customer enters the number of the mobile phone 200 (sender number) into the barcode validation unit 304 through, for example, a keyboard (not shown) connected thereto. The combination of the sender number and the barcode signal corresponding to the barcode 400 input on the shop 300 side is sent to the identity verifying device 100 and used to identify of the customer, i.e., for identity verification.

The barcode checking unit 124 of the identity verifying device 100 receives the combination of the sender number and the barcode (barcode signal) read by the barcode reader 302 at the shop 300 and transmitted from the barcode validation unit 304 (S10). Although the barcode signal is preferably transferred in, for instance, a GIF or JPEG compressed image format, other transfer methods are also acceptable.

The barcode checking unit 124 searches the barcode signal and assigned customer sender number (mobile phone number) combinations stored in the barcode database 122 to determine whether the barcode signal and mobile phone number combination sent from the shop 300 is recorded in the barcode database 122 (S12). When it is not recorded, the use is decided to be unauthorized and a signal to the effect that the identity of the customer is not verified is sent to the barcode validation unit 304 (S14). When it is recorded, the use is decided to be authorized and a verification signal to the effect that the identity of the customer is verified is sent to the barcode validation unit 304, thereby identifying the customer (S 16).

This identity verifying system can be used, for instance, for customer identification by a membership service that pays cash back in proportion to total purchases or for member verification and other types of customer management by a rental video shop. But it can also be applied to any of various other uses that require identity verification.

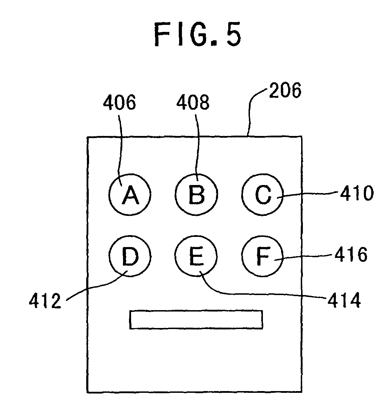

The present invention is not limited to the embodiments described above, and various modifications or variations are allowable within the scope of the claims. For example, in the foregoing embodiment, the present invention was explained with regard to an example in which only a single shop 300 conducts verification. There can, however, be a plurality of such shops. In such a case, the barcode request signal should include a signal indicating the shop at which the requested barcode is to be used for identity verification. Further, it is possible, for example, to respond to a barcode request signal by, as shown in Fig. 5, sending to the display unit 206 of the mobile phone 200 a screen displaying options A106, B108, C410, D412 and E414 for shops where system identity verification is available and have the customer select from among these.

In the foregoing embodiment, the customer database 112 is a list of registered customers. Depending on the use mode of the identity verifying system, however, it can be a list including all telephone company subscribers, i.e., can be a database version of a telephone directory.

In the foregoing embodiment, moreover, a case in which the barcode transceiver terminal is a single mobile phone 200 is taken as an example. However, the receiver terminal of the barcode device can instead be a personal computer or the like connected to a telephone line. In this case, the sender number is the number of the fixed telephone that the personal computer is connected to. In this mode, the barcode signal downloaded from the identity verifying device is once received by the personal computer and then input to a mobile phone or other mobile terminal equipped with a display capable of displaying a barcode. It is also possible in this mode to include a single representing the phone number of the customer's mobile phone in the barcode request signal from the personal computer and directly download the barcode signal with the customer's mobile phone, i.e., to use the personal computer as the barcode request means and the mobile phone as the barcode receive means.

Although the foregoing embodiment is configured to conduct verification by confirming the person's identity from a barcode and sender number (mobile phone number) combination, the confirmation/verification can instead be conducted based solely on the barcode (barcode signal) generated by the barcode generator or based on a combination of the barcode signal and another code or signal such as a password.

It is further possible to adopt a configuration in which customer credit data and the like are stored in the customer database 112 in advance and the barcode checking unit responds to a verification request from a shop by also ascertaining, and informing the shop of, the credit information at the same time as conducting the barcode check and the like. This configuration enables incorporation of credit card-like capability into the identity verifying system according to the present invention.

In the foregoing embodiment, the shop 300 requests the identity verifying device 100 to check the barcodes customers present. Alternatively, however, the shop 300 can be equipped with a database linked to the barcode database. With this configuration, the checks can be made in the shop 300 without need to exchange signals between the shop 300 and the identity verifying device 100 every time a barcode is checked.

In the forgoing embodiment, the customer requesting verification displays the barcode on a mobile phone for reading by the shop. Instead, however, it is possible to adopt a configuration in which the customer requesting verification (party desiring identity verification) sends the assigned barcode (barcode signal) or the like to the shop (identity verification requester) using a telecommunications circuit, and the shop reads the barcode and has it checked by the identity verifying device. This configuration can cope with situations in which the "shop" is a bank or a credit card company through which the customer settles payments or places orders.

The barcode request signal, barcode signal and the like can also be ones that are transferred over the Internet or other such network.

While the foregoing embodiment is configured so that the barcode generator generates a barcode when the sender number of the party desiring identity verification is found in the database, it is alternatively possible to adopt a configuration in which party desiring identity verification is requested to input a personal identification number (PIN) or ID registered in the database beforehand and a barcode is generated when the sender number is found in the database and the PIN (ID) matches the one recorded in the database.

Although the forgoing embodiment is configured to generate barcodes only for registered customers, a configuration can be adopted that generates barcodes for all parties requesting barcodes.

While the forgoing embodiment is configured so that when a barcode is assigned the generated barcode is transmitted to the party desiring identity verification, it is possible instead to adopt a configuration in which the generated barcode is stored on the identity verifying device (barcode generator) side so as to be accessible by only the party concerned and the party desiring identity verification obtains identity verification by accessing the identity verifying device (barcode generator) to have the barcode displayed on his or her terminal device.

## Claims

1. An identification barcode assigning method for assigning an identification barcode to a party desiring identity verification, the identification barcode assigning method comprising:
a step of receiving from the party a barcode request signal including a sender number of the party; and
a step of generating a barcode for the party.

2. An identification barcode assigning method according to claim 1, further comprising:
a step of transmitting the generated barcode to the party.

3. An identification barcode assigning method according to claim 1, further comprising:
a step of displaying the generated barcode to the party.

4. An identification barcode assigning method according to any of claims 1 to 3, wherein the step of generating a barcode comprises:
a step of discriminating whether the party is recorded in a database; and
a step of generating a barcode when the party is recorded in the database.

5. An identification barcode assigning method according to claim 4, further comprising:
a step of, when the party is not recorded in the database, so informing the party.

6. An identification barcode assigning method according to claim 4 or 5, further comprising:
a step of, when the party is not recorded in the database, sending the party a message advising the party to sign up.

7. An identification barcode assigning method according to any of claims 1 to 6, further comprising:
a step of storing the generated barcode in memory.

8. An identification barcode assigning method according to any of claims 1 and 4 to 7, wherein:
the sender number is a mobile phone number of the party; and
transmission of the barcode to the party is made to the party's mobile phone.

9. An identification barcode assigning method according to any of claims 1 and 4 to 7, wherein:
the sender number is a fixed phone number of the party; and
transmission of the barcode to the party is made to the party's fixed phone.

10. An identification barcode assigning method according to any of claims 1 to 9, wherein:
the barcode is a limited validity period barcode with an expiration date.

11. An identification barcode assigning method according to any of claims 1 to 10, wherein:
the barcode is a dedicated barcode for obtaining a specified service.

12. An identity verifying method using a barcode, the identity verifying method comprising:
a step of receiving from a party desiring identity verification a barcode request signal including a sender number of the party;
a step of generating a barcode for the party;
a step of storing the barcode in a barcode database;
a step of receiving a barcode presented by the party and transmitted by an identity verification requester requesting verification;
a step of discriminating whether the received barcode coincides with a barcode stored in the barcode database; and
a step of, when the received barcode is one stored in the barcode database, transmitting to the identification requester a signal to the effect that the party's identity is verified.

13. An identity verifying method according to claim 12, further comprising:
a step of transmitting the generated barcode to the party's sender number.

14. An identity verifying method according to claim 13, wherein:
the sender number is a mobile phone number of the party; and
transmission of the barcode to the party is made to the party's mobile phone.

15. An identity verifying method according to claim 13, wherein:
the sender number is a fixed phone number of the party; and
transmission of the barcode to the party is made to the party's fixed phone.

16. An identification barcode assigning method according to any of claims 12 to 15, wherein:
the barcode is a dedicated barcode for obtaining a specified service.

17. An identification barcode assigning method according to claim 12, further comprising:
a step of displaying the generated barcode to the party.

18. An identity verifying method according to any of claims 12 to 17, wherein:
the barcode is a limited validity period barcode with an expiration date.

19. An identification barcode assigning device, the identification barcode assigning device comprising:
receiving means for receiving from a party desiring identity verification a barcode request signal including a sender number of the party;
barcode generating means responsive to the barcode request signal for generating a barcode for the party;
a barcode database for recording the barcode generated by the barcode generating means; and
barcode storing means for storing the barcode in the barcode database.

20. An identification barcode assigning device according to claim 19, further comprising:
a database recording prescribed personal data,
the barcode generating means discriminating whether the party is recorded in the database and generating a barcode when the party is one recorded in the database.

21. An identification barcode assigning device according to claim 19 or 20, further comprising:
display means for displaying the generated barcode to the party.

22. An identification barcode assigning device according to claim 19 or 20, further comprising:
transmission means for transmitting the generated barcode to the party.

23. An identity verifying device that uses a barcode, the identity verifying device comprising:
receiving means for receiving from a party desiring identity verification a barcode request signal including a sender number of the party;
barcode generating means responsive to the barcode request signal for generating a barcode for the party;
a barcode database for recording the barcode generated by the barcode generating means;
barcode storing means for storing the barcode in the barcode database; and
barcode checking means for receiving a barcode presented by the party and transmitted by an identity verification requester requesting verification, discriminating whether the received barcode coincides with a barcode stored in the barcode database, and, when the received barcode is one stored in the barcode database, transmitting to the identification requester a signal to the effect that the party's identity is verified.

24. An identity verifying device according to claim 23, further comprising:
a database recording prescribed personal data,
the barcode generating means discriminating whether the party is recorded in the database and generating a barcode when the party is one recorded in the database.

25. An identity verifying device according to claim 23 or 24, further comprising:
display means for displaying the generated barcode to the party.

26. An identity verifying device according to claim 23 or 24, further comprising:
transmission means for transmitting the generated barcode to the party.

27. An identity verifying device that uses a barcode, the identity verifying device comprising:
barcode receiving means for receiving a barcode presented by the party and transmitted by an identity verification requester requesting verification;
discriminating means for discriminating whether the received barcode coincides with a barcode stored in a barcode database; and
barcode checking means for, when the received barcode is one stored in the barcode database, transmitting to the identification requester a signal to the effect that the party's identity is verified.

28. A portable terminal device using barcodes for identification, the portable terminal device comprising:
a display unit responsive to a request of a party desiring identity verification for displaying a barcode generated for the party.

29. A portable terminal device according to 28, wherein:
the portable terminal device is a mobile phone unit.
